# EUROPÄISCHE PATENTSCHRIFT

(11) **EP 0 768 207 B1**
(45) Veröffentlichungstag und Bekanntmachung des Hinweises auf die Patenterteilung: **16.08.2000**
(21) Anmeldenummer: 96115998.5
(22) Anmeldetag: 05.10.1996
(51) Int. Cl.: B60Q 1/26

(54) **Warnleuchte für Fahrzeuge**
Vehicle warning light
Feux d'avertisseur pour véhicule

(30) Priorität: 13.10.1995 DE 19538059
(43) Veröffentlichungstag der Anmeldung: 16.04.1997
(73) Patentinhaber: Hella KG Hueck & Co., 59552 Lippstadt (DE)
(72) Erfinder: Schreckenberg, Franz-Josef, 33178 Borchen (DE)

(56) Entgegenhaltungen:
- EP-A- 0 480 360
- DE-U- 8 902 373
- FR-A- 2 066 562

## Beschreibung

Die Erfindung betrifft eine Warnleuchte für Fahrzeuge mit den Merkmalen des Oberbegriffs des Anspruchs 1.

Eine derartige Warnleuchte ist aus der EP 0 480 360 A2 und aus dem DE 89 02 373 U1 vorbekannt. Diese vorbekannten Warnleuchten weisen Trägerelemente auf, die unlösbar mit dem Boden des schalenförmigen Sockels verbunden sind.

Diese unlösbare Verbindung des Trägerelements mit dem Boden führt jedoch zu Nachteilen. So ist aufgrund der unlösbaren Verbindung eine Trennung des Trägerelementes von dem Boden des Sockels im Falle einer Wiederverwertung der Materialien der Warnleuchten im Falle des Recycling nur mit unvertretbar hohem Aufwand möglich. Diese Trennung von Trägerelement und Boden ist jedoch aufgrund der unterschiedlichen verwendeten Materialien erforderlich. Der Sockel ist nämlich aus elastischem Material, wie zum Beispiel Gummi hergestellt, wogegen das Trägerelement üblicherweise aus einem thermoplastischen Werkstoff gespritzt ist.

Das heißt, die vorbekannten Warnleuchten sind aufgrund dieser unlösbaren Verbindung des Trägerelementes mit dem Boden nur unvollständig oder mit unvertretbar hohem Aufwand vollständig recyclebar.

Die Erfindung hat die Aufgabe, eine Warnleuchte für Fahrzeuge zu schaffen, die einfach und kostengünstig nahezu vollständig recycelt werden kann.

Diese Aufgabe wird bei einer Warnleuchte gemäß dem Oberbegriff des Anspruchs 1 dadurch gelöst, daß das Trägerelement lösbar mit dem Boden des Sockels verbunden ist und daß das Trägerelement Schnapparme aufweist, die in axial verlaufenden Nuten der Öffnung geführt sind.

Durch die erfindungsgemäß vorgesehene lösbare Verbindung können das Trägerelement und der Boden nach Ablauf der Nutzungsdauer der Warnleuchte im Rahmen einer Wiederverwertung einfach getrennt werden, so daß die im Rahmen des Recycling grundsätzliche gewünschte Trennung der verschiedenen Materialien unproblematisch ist. Darüber hinaus ergibt sich der weitere Vorteil der erfindungsgemäßen Warnleuchte, daß auch die Montage der Warnleuchte im Bereich der Verbindung von Trägerelement und Boden gegenüber dem Vorbekannten wesentlich vereinfacht ist, denn was einfach getrennt werden kann, kann auch einfach zusammengefügt werden.

Um zusätzlich zu einer axialen Fixierung auch einen Verdrehschutz des Trägerelementes in der Öffnung des Bodens zu gewährleisten, weist das Trägerelement Schnapparme auf, die in axial verlaufenden Nuten der Öffnungen gefügt sind.

Vorteilhafte Ausgestaltungen und Weiterbildungen der erfindungsgemäßen Warnleuchte ergeben sich aus den Unteransprüchen.

Die Öffnung kann in diesem Zusammenhang vorteilhaft eine Stufe aufweisen, an der ein Anschlagelement des Trägerelementes anliegt, so daß bei der Montage der genannten Teile ein unerwünschtes Herausrutschen des Trägerelementes aus der Öffnung und auch bei der Handhabung der erfindungsgemäßen Warnleuchte ein Verrutschen des Trägerelementes gegenüber dem Boden vermieden wird. In diesem Zusammenhang kann die sich durch die Stufe ergebende Erweiterung der Öffnung in Richtung auf die Lichthaube gerichtet sein, um den genannten Vorteil insbesondere bei der Montage der erfindungsgemäßen Warnleuchte zu erzielen.

Ebenfalls zur sicheren Fixierung des Trägerelementes am Boden kann das Trägerelement hakenförmige Elemente aufweisen, die den Rand der Öffnung hintergreifen.

Zur Vereinfachung der erfindungsgemäßen Warnleuchte kann das Trägerelement eine einstückig ausgebildete Aufnahme für den elektrischen Steckanschluß aufweisen. Mit dieser Maßnahme wird die Ausbildung des elektrischen Steckanschlusses gegenüber dem Vorbekannten wesentlich vereinfacht.

Ebenfalls der axialen und radialen Fixierung des Trägerelementes in der Bohrung des Bodens dient die Verwendung von Klemmbacken am Trägerelement, die sich in der entsprechenden Erweiterung der Öffnung abstützen können. Um die im Bereich der Öffnung des Bodens ungewollte Elastizität des elastischen Materials des Sockels zu verringern, ist es besonders vorteilhaft, wenn der Boden im Bereich der Öffnung eine Verdickung aufweist, so daß ein ungewolltes Entweichen des elastischen Materials von dem Trägerelement vermieden wird.

Weiterhin kann eine Klemmschelle vorgesehen sein, die die Wandung der Öffnung und das Trägerelement zumindest teilweise umgibt, so daß mit dieser Klemmschelle nicht nur die erfindungsgemäße Warnleuchte auf der rohrförmigen Aufnahme fixiert wird, sondern auch, daß das Trägerelement in der Öffnung fixiert wird. Um in diesem Zusammenhang die Anordnung der Klemmschelle auf der Warnleuchte unverlierbar zu machen, kann besonders vorteilhaft die Wandung der Öffnung auf der von der Lichthaube abgewandten Seite einen umlaufenden Vorsprung aufweisen.

Um die Abführung von im Inneren der Warnleuchte möglicherweise vorhandener oder sich bildender Flüssigkeit zur Vermeidung von unerwünschter Korrosion zu gewährleisten, kann der Boden des Sockels mindestens einen labyrinthförmigen Ablaufkanal aufweisen.

Der Sockel kann besonders vorteilhaft auch durch Befestigungsschrauben mit der Lichthaube verbunden sein, wobei in diesem Zusammenhang zwischen Sockel und Lichthaube ein Tragteil angeordnet sein kann und wobei der Sockel mit dem Tragteil verbunden ist. Diese Schraubverbindung ist einfach herstellbar und bietet zudem den Vorteil der Austauschbarkeit des Sockels für das Aufstecken der Warnleuchte auf eine rohrförmige Aufnahme gegen einen Sockel beispielsweise für eine Schraubbefestigung der Warnleuchte auf einem ebenen Untergrund.

Um auch in diesem Fall ein unerwünschtes Entweichen des elastischen Sockelmaterials gegenüber dem übrigen Teil zu verhindern und damit eine sichere Befestigung des Sockels an den übrigen Teilen der Warnleuchte zu gewährleisten, kann besonders vorteilhaft zwischen dem Sockel und den Befestigungsschrauben ein Verstärkungsring vorgesehen sein. Um die notwendige Steifigkeit dieses Versteifungsringes zu gewährleisten, kann der Verstärkungsring mit einer Versteifungssicke versehen werden.

Ein Ausführungsbeispiel der Warnleuchte für Fahrzeuge ist in den Zeichnungen dargestellt und wird im folgenden anhand der Zeichnungen näher erläutert.

Es zeigen
- Figur 1: einen Schnitt durch die Längsachse einer Warnleuchte für Fahrzeuge;
- Figur 2: einen Schnitt durch den elastischen Sockel;
- Figur 3: eine Ansicht auf die Unterseite des elastischen Sockels mit Blickrichtung in der Figur 1 von unten;
- Figur 4: einen Schnitt durch das Trägerelement der Warnleuchte;
- Figur 5: einen Schnitt durch dasselbe Trägerelement, wobei nun die Längsachse um 45° gedreht ist und
- Figur 6: eine Ansicht des Verstärkungsringes der Warnleuchte.

Das Gehäuse der Warnleuchte besteht im wesentlichen aus dem aus elastischem Material hergestellten schalenförmigen Sockel (1) und der von dem Sockel (1) getragenen lichtdurchlässigen Lichthaube (2). Die aus starrem Material hergestellte lichtdurchlässige Lichthaube ist lösbar mit dem aus starrem Material hergestellten ringförmigen Tragelement (3) verbunden. Hierbei überlappt die Lichthaube (2) mit ihrem äußeren umlaufenden Randabschnitt die am äußeren Rand verlaufende zylinderförmige Wandung des ringförmigen Tragteiles (3). Das ringförmige Tragteil (3) ist mit einer plattenförmigen Aufnahmevorrichtung (5) quer durchsetzt, welche den Elektromotor (6) und den um die Mittelachse der Warnleuchte drehbar gelagerten Reflektor (7) mit der feststehend angeordneten Glühlampe (8) trägt.

Der aus elastischem Werkstoff hergestellte Sockel (1) weist zentral eine Öffnung (9) auf, in welche das aus starrem Material, wie zum Beispiel aus thermoplastischem Kunststoff hergestellte hohle Trägerelement (10) eingeschoben ist. In das Trägerelement (10) ist ein elektrischer Steckanschluß (11) eingesetzt, welcher mit den elektrischen Zuleitungen (12) für die Glühlampe (8) und dem Elektromotor (6) verbunden ist.

In den Boden (13) des schalenförmigen Sockels (1) ist angrenzend an die Öffnung (9) die Einstülpung (14) zur Lichthaube (2) hin angebracht.

Im Bereich der zentralen Öffnung (9) weist der Boden (13) eine Verdickung (15) auf. Die Befestigung des Sockels an dem Tragteil (3) erfolgt mittels dreier Befestigungsschrauben (4), wobei ein ungewolltes Entweichen des elastischen Materials durch einen Verstärkungsring (16) zwischen den Schraubenköpfen der Befestigungsschrauben (4) und dem Sockel (1) vermieden wird.

Weiterhin weist der Sockel (1) zur Abführung von im inneren der Warnleuchte unerwünschter Feuchtigkeit labyrinthförmige Wasserablaufkanäle (17) auf.

Die erfindungsgemäße Warnleuchte wird auf die rohrförmige Aufnahme mit dem hohlen Trägerelement (10) aufgesteckt. Die Befestigung der Warnleuchte auf der rohrförmigen Aufnahme erfolgt mittels einer Klemmschelle (18), die zugleich die Wandung der zentralen Öffnung (9) und das hohle Trägerelement (10) teilweise umgreift.

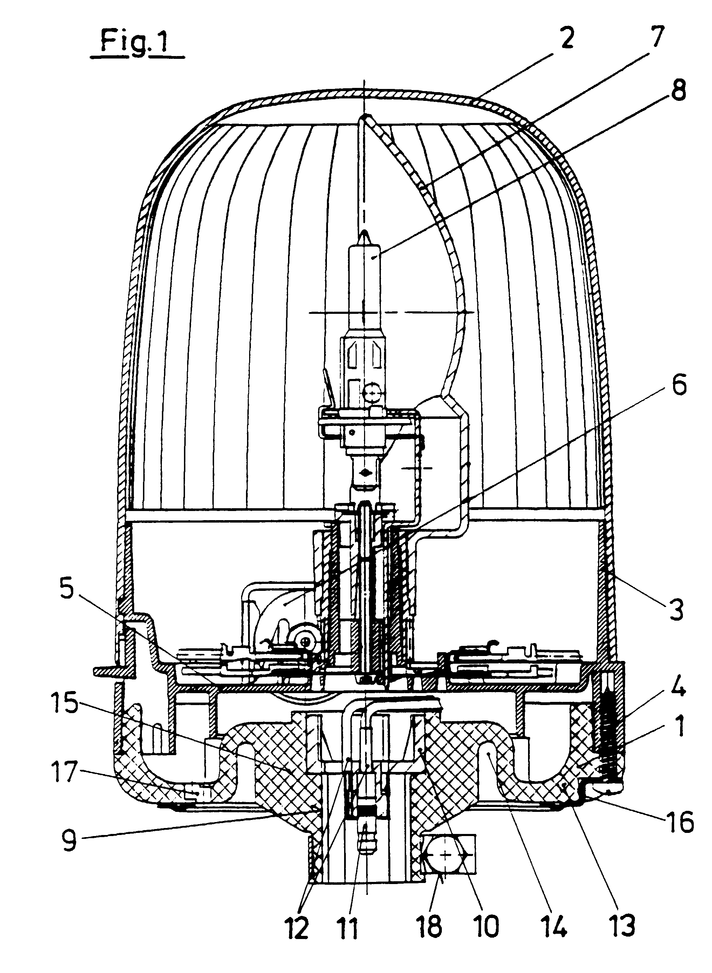

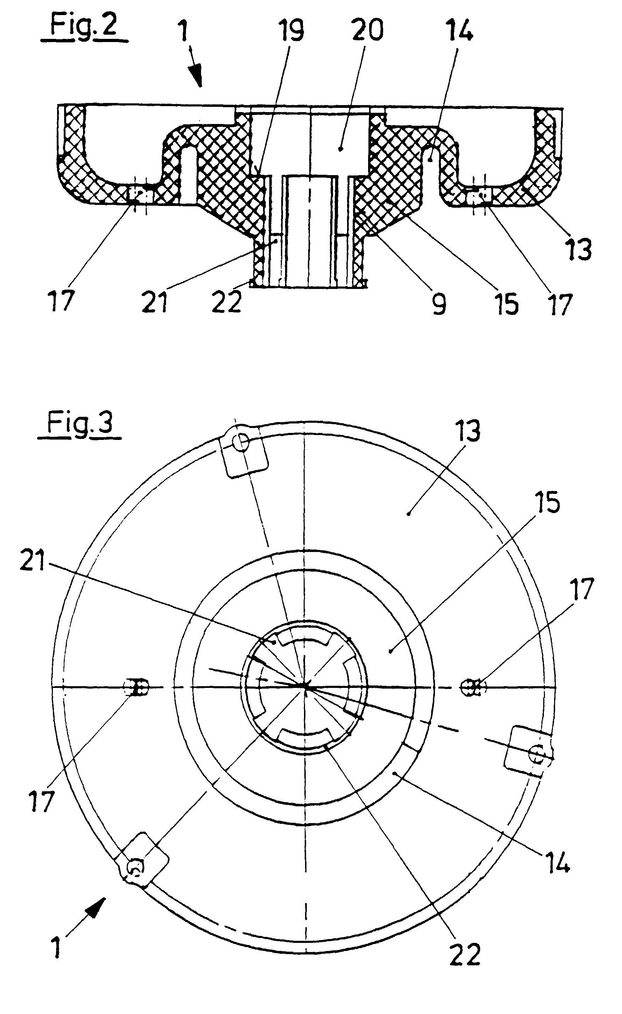

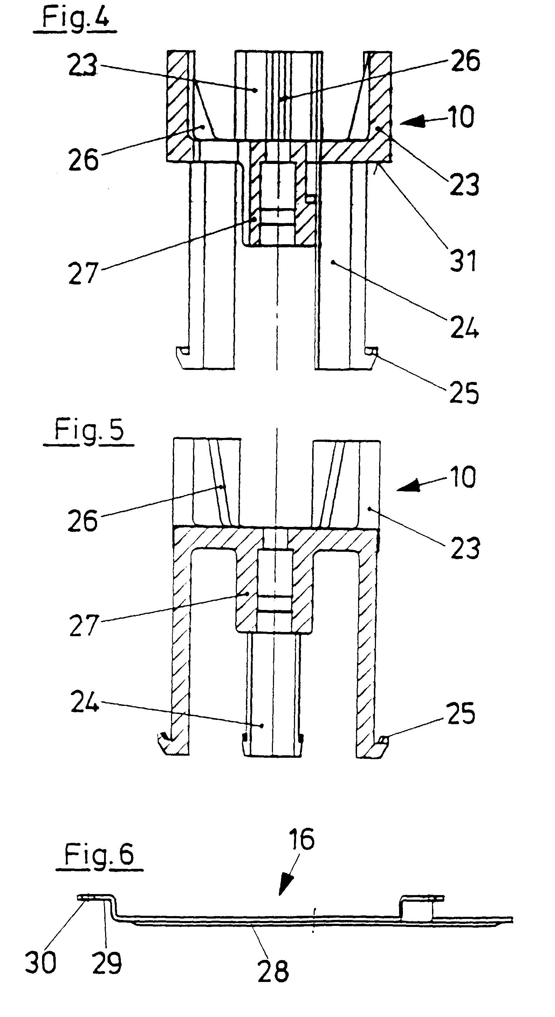

Insbesondere in der Figur 2, in der gleiche oder gleichwirkende Einrichtungsteile wie in der Figur 1 mit denselben Bezugszeichen versehen sind, wird deutlich, daß nicht nur eines, sondern mehrere labyrinthförmige Wasserablaufkanäle (17) vorgesehen sind. Darüber hinaus erkennt man eine Erweiterung (20) der zentralen Öffnung (9), die der Lichthaube der Warnleuchte zugewandt ist, so daß sich zwischen diese Erweiterung (20) und dem übrigen Teil der zentralen Öffnung (9) eine Stufe (19) ergibt, an der ein Anschlagelement (31) des hohlen Trägerelementes (10), wie es in der Figur 4 dargestellt ist, im montierten Zustand des Trägerelementes in der zentralen Öffnung (9) anliegt.

Darüber hinaus erkennt man in der Figur 2 axial verlaufende Nuten (21) der Öffnung (9), die mit Schnapparmen (24) des hohlen Trägerelementes (10) gemäß Figur 4 bzw. Figur 5 korrespondieren. Schließlich weist der Sockel (1) an dem von der Lichthaube abgewandten Ende einen umlaufenden Vorsprung (22) auf, der ein Herabrutschen der Klemmschelle (18) gemäß Figur 1 von der Warnleuchte verhindert.

In der Figur 3, in der gleiche oder gleichwirkende Einrichtungsteile wie in der Figur 2 mit denselben Bezugszeichen versehen sind, erkennt man nochmals deutlich die Ausbildung der axial verlaufenden Nuten (21) der zentralen Öffnung (9).

In den Figuren 4 und 5 in der ebenfalls gleiche oder gleichwirkende Einrichtungsteile mit den denselben Bezugszeichen wie in den Figuren 1 bis 3 versehen sind, weist das hohle Trägerelement (10) neben dem Anschlagelement (31) Klemmbacken (23) auf, die sich an der Wandung der Erweiterung (20) des Sockels (1) abstützen. Um ein Verbiegen dieser Klemmbacken (23) zu vermeiden, sind die Klemmbacken (23) mit Versteifungen (26) versehen.

Vom Anschlagelement (31) ausgehend erstrecken sich in den Figuren 4 und 5 nach unten die bereits genannten Schnapparme (24), die in den axial verlaufenden Nuten (21) der zentralen Öffnung (9) eingreifen und somit ein Verdrehen des hohlen Trägerelementes (10) in der zentralen Öffnung (9) vermeiden. Zudem sind an den in den Figuren 4 und 5 unteren Enden der Schnapparme (24) hakenförmige Elemente (25) angeordnet, die den umlaufenden Vorsprung (22) des Sockels (1) derart hintergreifen, daß ein ungewolltes Verrutschen des hohlen Trägerelementes (10) in der zentralen Öffnung (9) vermieden wird.

Andererseits können im Falle der Trennung der Warnleuchtenteile zum Zwecke des Recyclings der Warnleuchte diese Schnapparme leicht eingebogen werden, um das Herausschieben des hohlen Trägerelementes (10) aus der zentralen Öffnung (9) und damit die Trennung dieser beiden Teile zu ermöglichen.

Das hohle Trägerelement (10) weist eine einstückig aus Kunststoff gespritzte Aufnahme (27) für den Steckanschluß (11) auf. Dies vereinfacht die Ausbildung des elektrischen Steckanschlusses der erfindungsgemäßen Warnleuchte.

In der Figur 6 ist der Verstärkungsring (16), der zwischen den Schraubenköpfen der Befestigungsschrauben (4) und dem Sockel (1) angeordnet ist, im einzelnen dargestellt. Man erkennt, daß der Verstärkungsring (16) eine Versteifungssicke (28) aufweist und mit Befestigungsfortsätzen (29) versehen ist. In diesen Befestigungsfortsätzen (29) sind Schraubenbohrungen (30) zum Hindurchstecken der Befestigungsschrauben vorgesehen.

Die Montage des hohlen Trägerelementes (10) in der zentralen Öffnung (9) erfolgt nun derart, daß das Trägerelement (10) ohne weitere Schwierigkeiten in die Öffnung (9) hineingesteckt wird, wobei nach vollständigem Hineinstecken das Anschlagelement (31) an der Stufe (19) anliegt und die hakenförmigen Elemente (25) den umlaufenden Vorsprung (22) hintergreifen. Danach sind der Sockel (1) und das hohle Trägerelement (10) so fest miteinander verbunden, daß auch die axialen Schubkräfte der rohrförmigen Aufnahme sowohl beim Aufschieben der Warnleuchte auf die rohrförmige Aufnahme als auch bei dem Betrieb der Warnleuchte auf der rohrförmigen Aufnahme aufgefangen werden.

Andererseits kann die Trennung von Sockel (1) und hohlem Trägerelement (10) im Falle der Wiederverwertung der Warnleuchtenteile problemlos dadurch erfolgen, daß die Schnapparme (24) in Richtung auf die Mittelachse der Warnleuchte gebogen werden und das hohle Trägerelement (10) in der Figur 1 nach oben aus der zentralen Öffnung (9) des Sockel (1) herausgeschoben wird.

### Bezugszeichenliste

### Warnleuchte für Fahrzeuge

- 1: Sockel aus elastischem Werkstoff
- 2: Lichthaube
- 3: Tragteil 1
- 4: Befestigungsschrauben
- 5: Plattenförmige Aufnahmevorrichtung
- 6: Elektromotor
- 7: Reflektor
- 8: Glühlampe
- 9: Zentrale Öffnung von 1
- 10: Hohles Trägerelement
- 11: Elektrischer Steckanschluß
- 12: Elektrische Zuleitungen
- 13: Boden von 1
- 14: Einstülpung
- 15: Verdickung
- 16: Verstärkungsring
- 17: labyrinthförmiger Wasserablaufkanal
- 18: Klemmschelle
- 19: Stufe
- 20: Erweiterung
- 21: Axial verlaufende Nuten
- 22: Umlaufender Vorsprung
- 23: Klemmbacken
- 24: Schnapparme
- 25: Hakenförmige Elemente
- 26: Versteifungen
- 27: Aufnahme für Steckeranschluß
- 28: Versteifungssicke
- 29: Befestigungsfortsätze
- 30: Schraubenbohrungen
- 31: Anschlagelement

## Patentansprüche

1. Warnleuchte für Fahrzeuge mit folgenden Merkmalen:
- die Lichtquelle (8) ist in ein Gehäuse eingesetzt, welches aus einer lichtdurchlässigen Lichthaube (2) und einem die Lichthaube (2) tragenden Sockel (1) besteht,
- der Sockel (1) ist schalenförmig ausgeführt und aus elastischem Material hergestellt,
- an dem äußeren umlaufenden Rand des schalenförmigen Sockels (1) ist die Lichthaube (2) befestigt,
- mit dem Boden (13) des schalenförmigen Sockels ist zentral ein Trägerelement (10) verbunden, welches hohl ausgeführt ist und durch welches die Warnleuchte auf eine rohrförmige Aufnahme aufsteckbar ist,
- der Boden (13) weist eine zentrale Öffnung (9) auf, in die das Trägerelement (10) eingesteckt ist, dadurch gekennzeichnet, daß
- das Trägerelement (10) lösbar mit dem Boden (13) des Sockels (1) verbunden ist und daß das Trägerelement (10) Schnapparme (24) aufweist, die in axial verlaufenden Nuten (21) der Öffnung (9) geführt sind.

2. Warnleuchte für Fahrzeuge nach Anspruch 1, dadurch gekennzeichnet, daß die Öffnung (9) eine Stufe (19) aufweist, an der ein Anschlagelement (31) des Trägerelements (10) anliegt.

3. Warnleuchte für Fahrzeuge nach Anspruch 2, dadurch gekennzeichnet, daß die sich durch die Stufe (19) ergebende Erweiterung (20) der Öffnung (9) in Richtung auf die Lichthaube (2) gerichtet ist.

4. Warnleuchte für Fahrzeuge nach Anspruch 1, dadurch gekennzeichnet, daß das Trägerelement (10) hakenförmige Elemente (25) aufweist, die den Rand der Öffnung (9) hintergreifen.

5. Warnleuchte für Fahrzeuge nach Anspruch 1, dadurch gekennzeichnet, daß das Trägerelement (10) eine einstückig ausgebildete Aufnahme (27) für den elektrischen Steckanschluß (11) aufweist.

6. Warnleuchte für Fahrzeuge nach Anspruch 1, dadurch gekennzeichnet, daß das Trägerelement (10) Klemmbacken (23) aufweist.

7. Warnleuchte für Fahrzeuge nach Anspruch 1, dadurch gekennzeichnet, daß der Boden (13) im Bereich der Öffnung (9) eine Verdickung (15) aufweist.

8. Warnleuchte für Fahrzeuge nach Anspruch 1, dadurch gekennzeichnet, daß eine Klemmschelle (18) vorgesehen ist, die die Wandung der Öffnung und das Trägerelement (10) zumindest teilweise umgibt.

9. Warnleuchte für Fahrzeuge nach Anspruch 8, dadurch gekennzeichnet, daß die Wandung der Öffnung (9) auf der von der Lichthaube (2) abgewandten Seite einen umlaufenden Vorsprung (22) aufweist.

10. Warnleuchte für Fahrzeuge nach Anspruch 1, dadurch gekennzeichnet, daß der Boden (13) des Sockels (1) mindestens einen labyrinthförmigen Ablaufkanal (17) aufweist.

11. Warnleuchte für Fahrzeuge nach Anspruch 1, dadurch gekennzeichnet, daß der Sockel (1) durch Befestigungsschrauben (4) mit der Lichthaube (2) verbunden ist.

12. Warnleuchte für Fahrzeuge nach Anspruch 11, dadurch gekennzeichnet, daß zwischen Sockel (1) und Lichthaube (2) ein Tragteil (3) angeordnet ist und daß der Sockel (1) mit dem Tragteil (3) verschraubt ist.

13. Warnleuchte für Fahrzeuge nach Anspruch 12, dadurch gekennzeichnet, daß zwischen dem Sockel (1) und den Befestigungsschrauben (4) ein Verstärkungsring (16) angeordnet ist.

14. Warnleuchte für Fahrzeuge nach Anspruch 13, dadurch gekennzeichnet, daß der Verstärkungsring (16) eine Versteifungssicke (28) und Schraubenbohrungen (30) aufweist.

## Claims

1. Warning light for vehicles having the following features:
- the light source (8) is set within a housing which consists of a light transmitting light hood (2) and a socket (1) that carries the light hood (2),
- the socket (1) is formed bowl shaped and made of elastic material,
- the light hood (2) is secured at the outer peripheral rim of the bowl shaped socket (1),
- centrally connected to the base (13) of the bowl shaped socket there is a carrier element (10) which is formed hollow and by means of which the warning light can be plugged onto a tubular mounting,
- the base (13) has a central opening (9) into which the carrier element (10) is plugged, characterised in that,
- the carrier element (10) is releasably connected with the base (13) of the socket (1), and the carrier element (10) has snap action arms (24) which are guided in axially extending grooves (21) of the opening (9).

2. Warning light for vehicles according to claim 1, characterised in that the opening (9) has a step (19) against which a stop element (31) of the carrier element (10) abuts.

3. Warning light for vehicles according to claim 2, characterised in that the widening (20) of the opening (9) that results from the step (19) is directed in the direction of the light hood (2).

4. Warning light for vehicles according to claim 1, characterised in that the carrier element (10) has hook shaped elements (25) which engage behind the rim of the opening (9).

5. Warning light for vehicles according to claim 1, characterised in that the carrier element (10) has a mounting (27) formed in one piece with it for the electric plug-in connection (11).

6. Warning light for vehicles according to claim 1, characterised in that the carrier element (10) has clamping jaws (23).

7. Warning light for vehicles according to claim 1, characterised in that the base (13) has an enlargement (15) in the region of the opening (9).

8. Warning light for vehicles according to claim 1, characterised in that a clamping collar (18) is provided which at least partly surrounds the wall of the opening and the carrier element (10).

9. Warning light for vehicles according to claim 8, characterised in that the wall of the opening (9) has a peripheral projection (22) at its side remote from the light hood (2).

10. Warning light for vehicles according to claim 1, characterised in that the base (13) of the socket (1) has at least one labyrinth shaped drainage channel (17).

11. Warning light for vehicles according to claim 1, characterised in that the socket (1) is connected to the light hood (2) by securing screws (4).

12. Warning light for vehicles according to claim 11, characterised in that a carrying member (3) is arranged between socket (1) and light hood (2) and that the socket (1) is screw connected to the carrying member (3).

13. Warning light for vehicles according to claim 12, characterised in that a reinforcing ring (16) is arranged between the socket (1) and the securing screws (4).

14. Warning light for vehicles according to claim 13, characterised in that the reinforcing ring (16) has a stiffening bead (28) and screw holes (30).

## Revendications

1. Feu d'avertissement pour véhicules comportant les caractéristiques suivantes :
- la source de lumière (8) est mise en place dans un boîtier qui est constitué par un capot de feu (2) translucide et par un socle (1) portant le capot de feu (2),
- le socle (1) est réalisé en forme de coque et en matériau élastique,
- le capot de feu (3) est fixé sur le bord périphérique extérieur du socle (1) en forme de coque,
- avec le fond (13) du socle en forme de coque est relié au centre un élément support (10) qui est réalisé creux et au moyen duquel le feu avertisseur est susceptible d'être coiffé sur un élément récepteur tubulaire,
- le fond (13) présente une ouverture (9) centrale dans laquelle est enfiché l'élément support (10),
caractérisé en ce que
- l'élément support (10) est relié de manière détachable avec le fond (13) du socle (1) et en ce que l'élément support (10) présente des bras d'encliquetage (24) qui sont guidés dans des gorges (21) axiales de l'ouverture (9).

2. Feu avertisseur pour véhicules selon la revendication 1, caractérisé en ce que l'ouverture (9) présente un gradin (19) sur lequel prend appui un élément de butée (31) de l'élément support.

3. Feu avertisseur pour véhicules selon la revendication 2, caractérisé en ce que l'évasement (20) de l'ouverture (9) résultant du gradin (19) est orienté en direction du capot de feu (2).

4. Feu avertisseur pour véhicules selon la revendication 1, caractérisé en ce que l'élément support (10) présente des éléments (25) en forme de crochets qui engagent le bord de l'ouverture (9) par l'arrière.

5. Feu avertisseur pour véhicules selon la revendication 1, caractérisé en ce que l'élément support (10) présente un logement, réalisé d'un seul tenant, pour la prise de courant électrique enfichable (11).

6. Feu avertisseur pour véhicules selon la revendication 1, caractérisé en ce que l'élément support (10) présente des mâchoires de serrage (23).

7. Feu avertisseur pour véhicules selon la revendication 1, caractérisé en ce que le fond (13) présente un renflement (15) dans la région de l'ouverture (9).

8. Feu avertisseur pour véhicules selon la revendication 1, caractérisé en ce qu'il est prévu un collier de serrage (18) qui entoure au moins partiellement la paroi de l'ouverture et l'élément support (10).

9. Feu avertisseur pour véhicules selon la revendication 8, caractérisé en ce que la paroi de l'ouverture (9) présente une saillie (22) périphérique sur le côté détourné du capot de feu (2).

10. Feu avertisseur pour véhicules selon la revendication 1, caractérisé en ce que le fond (13) du socle (1) présente au moins un canal d'évacuation en forme de labyrinthe.

11. Feu avertisseur pour véhicules selon la revendication 1, caractérisé en ce que le socle (1) est relié au capot de feu (2) par des vis de fixation (4).

12. Feu avertisseur pour véhicules selon la revendication 11, caractérisé en ce qu'entre le socle (1) et le capot de feu (2) est agencée une pièce portante (3) et en ce que le socle (1) est vissé à la pièce portante (3).

13. Feu avertisseur pour véhicules selon la revendication 12, caractérisé en ce qu'un anneau de renforcement (16) est agencé entre le socle (1) et les vis de fixation (4).

14. Feu avertisseur pour véhicules selon la revendication 13, caractérisé en ce que l'anneau de renforcement (16) présente un soyage de rigidification (28) et des perçages taraudés (30).
